# EUROPEAN PATENT APPLICATION

(11) **EP 2 896 288 A1**
(43) Date of publication of application: **22.07.2015**
(21) Application number: 14191111.5
(22) Date of filing: 30.10.2014
(51) Int. Cl.: A01G 13/00, A01G 13/10, F16M 13/02

(54) **Attachment clip, particularly for a horticultural cage**

(30) Priority: 31.10.2013 GB 201319295
(71) Applicant: Harrod UK Limited, Lowestoft, Suffolk NR33 7 NL (GB)
(72) Inventor: Rocke, Alex, Lowestoft, Suffolk NR33 7NL (GB)
(74) Representative: Harris, Oliver John Richard

(57) **Abstract**

A horticultural cage (1) comprises a mesh (6) enclosure attached to a frame (2) by means of clips (3), each clip (3) including a portion which is released without damage from the frame (2), the mesh (6), or another portion of the clip (3) when the force applied by the mesh (6) to the clip (3) reaches a threshold limit, so that the clips (3) can afterwards be re-engaged in the use position to re-suspend the mesh (6) from the frame (2). The clips (3) prevent weather damage to the frame (2) and are preferably slidable along the frame (2) for ease of access to the plants within the enclosure.

## Description

This invention relates in particular to horticultural fruit or vegetable cages comprising a frame supporting an enclosure of mesh or other fabric for excluding animals such as birds or insects from growing plants.

The enclosure is typically a rectilinear assembly of four sides and a roof which is suspended at intervals from the frame. It may comprise panels of mesh or netting, which is a flexible, permeable fabric comprising a plurality of apertures defined by intersecting filaments and having a mesh size corresponding to the pest species which is to be excluded, ranging from fine, woven mesh with a mesh size of 0.25mm x 0.8mm or even less for excluding small insects, up to knitted or knotted netting with a mesh size of 80mm x 80mm or more for excluding pigeons and the like. Other fabrics such as fleece or transparent plastics sheeting can also be used, which, like fine mesh, provide protection against wind and cold.

The dimensions of the frame are selected according to the size of the growing plants to be enclosed by the cage. Fruit bushes and small fruit trees will generally require a frame which is high enough to allow the user to walk beneath the upper panel of mesh defining the roof of the cage, whereas a lower cage may be used to enclose vegetables and flowers. Low cages are less expensive and less visually obtrusive, and also less prone to damage in windy conditions, but can be inconvenient in use, requiring the user to stoop and reach under the mesh in order to access the growing plants. Higher cages are easier to access if a door is provided in the frame, but the wind resistance of the mesh or other fabric forming the sides of the enclosure can be sufficient to cause damage to the frame in high winds. Snow accumulating on the enclosure can also cause the collapse of the frame due to the increase in weight and wind resistance. It is therefore often necessary to remove the mesh from the frame in the winter.

It is the object of the present invention to mitigate the above mentioned problems so that a fruit or vegetable cage may be more convenient in use.

According to the present invention there are provided a clip, a horticultural cage, and an assembly as defined in the claims.

Further features and advantages will be evident from the following illustrative embodiments which are described, purely by way of example and without limitation to the scope of the claims, and with reference to the accompanying drawings, in which:
Fig. 1A shows a horticultural cage having a mesh suspended from a plurality of clips;
Fig. 1B shows the cage with the mesh released from the frame;
Fig. 1C shows the cage with the mesh slid back along the frame;
Fig. 2 shows a first clip in accordance with a first embodiment;
Figs. 3A - 3C show the first clip respectively in the use position (Fig. 3A), partially disengaged from the support (Fig. 3B), and fully disengaged from the support (Fig. 3C);
Figs. 4A and 4B are respectively a side view and a front view of the first clip engaged with the support in a rest condition;
Fig. 4C is a bottom end view of the first clip;
Fig. 4D is a section at D - D of Fig. 4B;
Fig. 4E shows the envelope defined by the section of Fig. 4D;
Fig. 5A shows the first clip in a strained condition arising during insertion into an aperture of the mesh;
Fig. 5B is a section at B - B of Fig. 5A;
Fig. 5C shows the envelope defined by the section of Fig. 5B;
Fig. 6A shows the section of Fig. 4D when the first clip is engaged with the mesh in a rest condition;
Fig. 6B shows the section of Fig. 5B when the first clip is inserted into an aperture of the mesh in a strained condition;
Fig. 6C is an enlarged view of the mesh showing the position of the envelope in the strained condition;
Figs. 7A and 8A show the first clip engaged with the support, respectively at rest (Fig. 7A) and at the first stage of disengagement (Fig. 8A);
Figs. 7B and 8B are enlarged views of Figs. 7A and 8A respectively, showing the contact surfaces of the clip and the support;
Fig. 9 shows the first clip in an initial position during re-engagement with the suppport;
Figs. 10A - 15 show a second clip in accordance with a second embodiment, wherein:

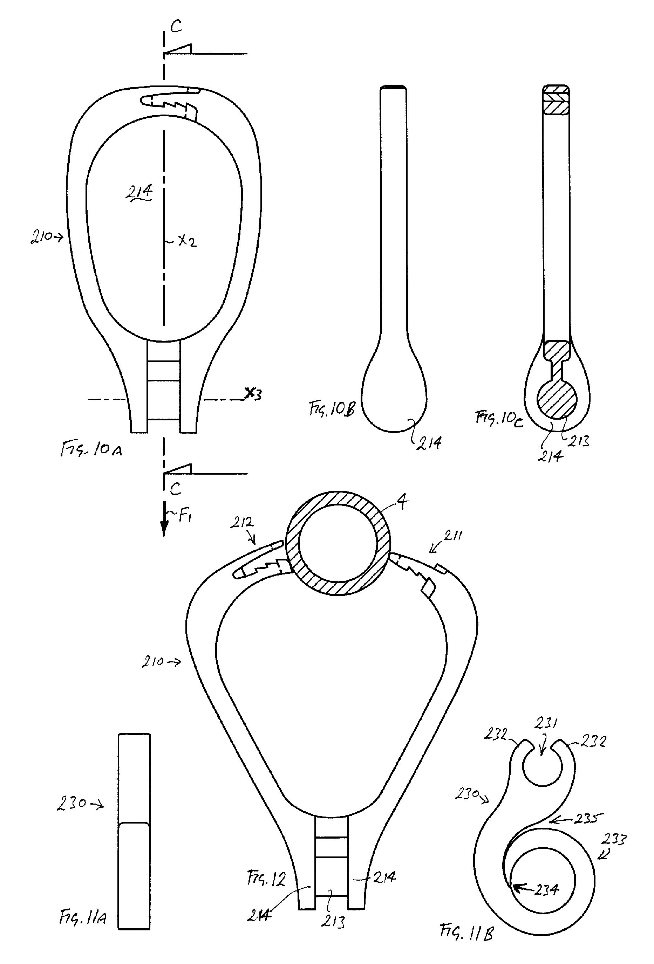

Figs. 10A - 10C show the support portion of the second clip in a closed condition, respectively in front view (Fig. 10A), in side view (Fig. 10B), and sectioned at C - C of Fig. 10A (Fig. 10C);
Figs. 11A and 11B show the fixture portion of the second clip, respectively in front view (Fig. 11A) and side view (Fig. 11B);
Fig. 12 shows the support portion of the second clip in an open condition during engagement with the support;

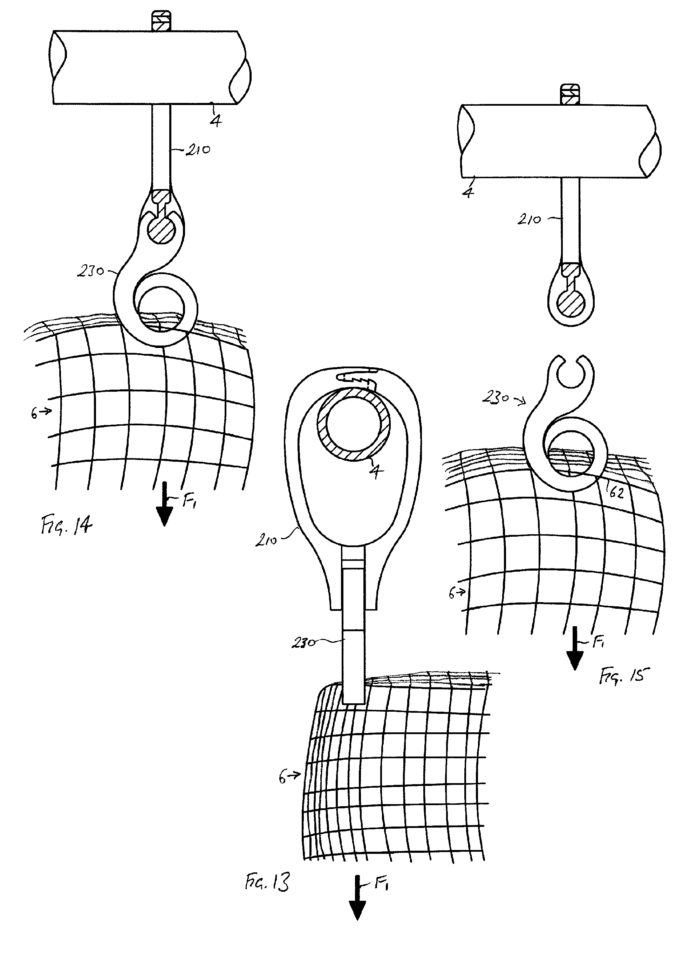

Figs. 13 and 14 show the second clip in the use position, respectively in front view (Fig. 13) and in side view with the support portion sectioned as in Fig. 10C (Fig. 14); and
Fig. 15 is a view corresponding to Fig. 14 after disengagement of the fixture portion from the support portion; and

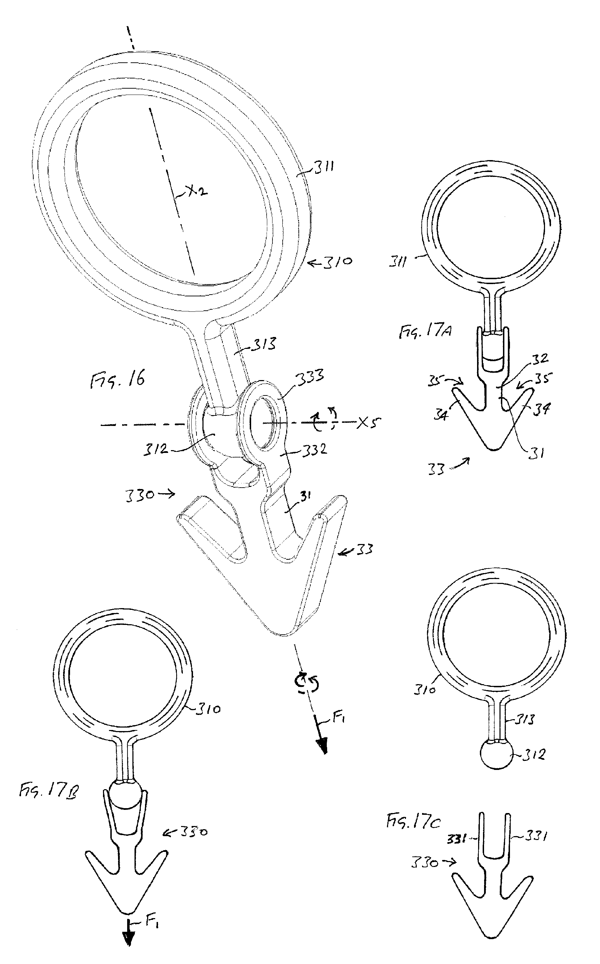

Figs. 16 - 17C show a third clip in accordance with a third embodiment, wherein: Fig. 16 shows the fixture portion engaged with the support portion; and
Figs. 17A - C show the fixture portion and support portion respectively fully engaged (Fig. 17A), partially disengaged (Fig. 17B), and fully disengaged (Fig. 17C).

Corresponding reference numerals indicate corresponding features in each of the figures.

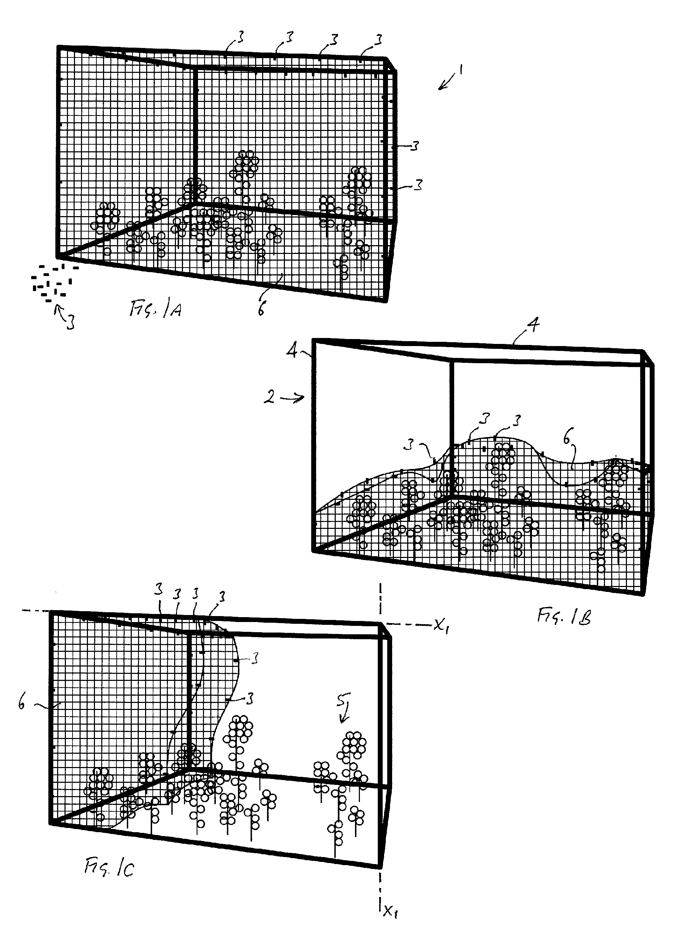

Referring to Figs. 1A - 1C, a horticultural cage 1 is assembled from a rectilinear frame 2, an enclosure made from panels of fabric, and a plurality of clips 3 attached to each of the bars 4 of the frame for suspending and stretching the fabric within the frame so that the enclosure surrounds a group of growing plants 5. In the illustrated example, the fabric is a mesh 6 of a mesh size suitable for excluding insects and the like. Each clip includes a fixture portion for engaging the clip with the fabric, and a support portion for engaging the clip with the support so as to suspend the fabric from the support in a use position of the clip (Fig. 1A) wherein the fabric applies a force in a force direction to the fixture portion, as further described below. The bottom edge of the mesh can be left free, clipped to a bottom bar of the frame, or pegged to the ground, as preferred.

Each clip is configured to release the mesh from the frame when the force applied to the fixture portion by the mesh in the force direction increases to a predetermined magnitude, hereinafter termed the release force. In the example shown, the release force is in a range from about 30N to about 100N, and the clips are spaced apart along the bars of the frame by about 0.5m. The release force and the spacing of the clips are selected so that the mesh will detach from the frame when the wind force on the side panels or the weight of snow on the roof panel reaches a desired threshold limit and before causing damage to the frame (Fig. 1B). Advantageously, the user can thus leave the enclosure attached to the frame in all weathers.

Further advantageously, each clip is also freely slidable along a length axis X1 of the respective bar 4 of the frame. By disengaging the clips on the vertical bars and one horizontal bar at one end of the cage, the mesh enclosure can thus be slid back along the length of the cage while the clips supporting the roof panel slide along the other horizontal bars (Fig. 1C). In this manner the user can gain full access from all directions to the plants while the enclosure remains suspended from the frame.

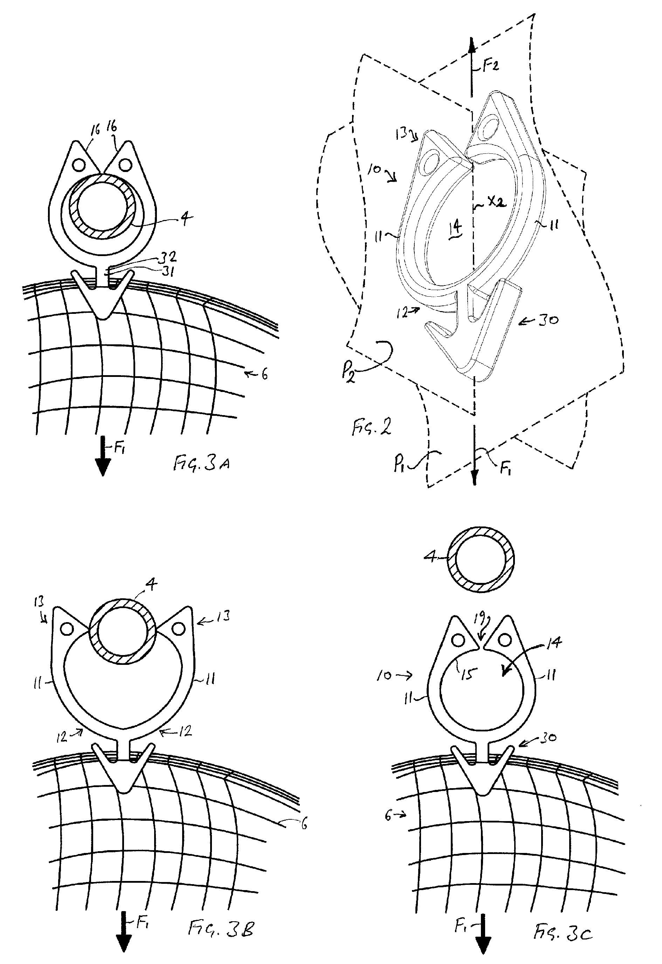

Referring to Figs. 2 - 9, in a first embodiment, each clip comprises a support portion 10 and a fixture portion 30, formed as integral parts of a single plastics moulding (for example, polypropylene, nylon or other suitable material) as best seen in Fig. 2, with the composition of the material being selected for the desired elastic modulus, flexural modulus, and other mechanical properties. The clip has a first plane of symmetry P1 which bisects it in its thickness direction, so that it can be formed in a simple two-part injection mould, and a second plane of symmetry P2 orthogonal to the first plane P1 and bisecting the clip along its length direction. The force direction F1 lies along the length axis X2 of the clip defined by the line of intersection of these two planes.

The first plane of symmetry P1 is hereinafter referred to as the reference plane, and it will be understood that the reference plane is aligned with the force direction.

The support portion 10 is resiliently deformable, comprising a pair of resilient arms 11, each arm having a proximal end region 12 and a distal end region 13, the proximal end regions being joined to the fixture portion 30.

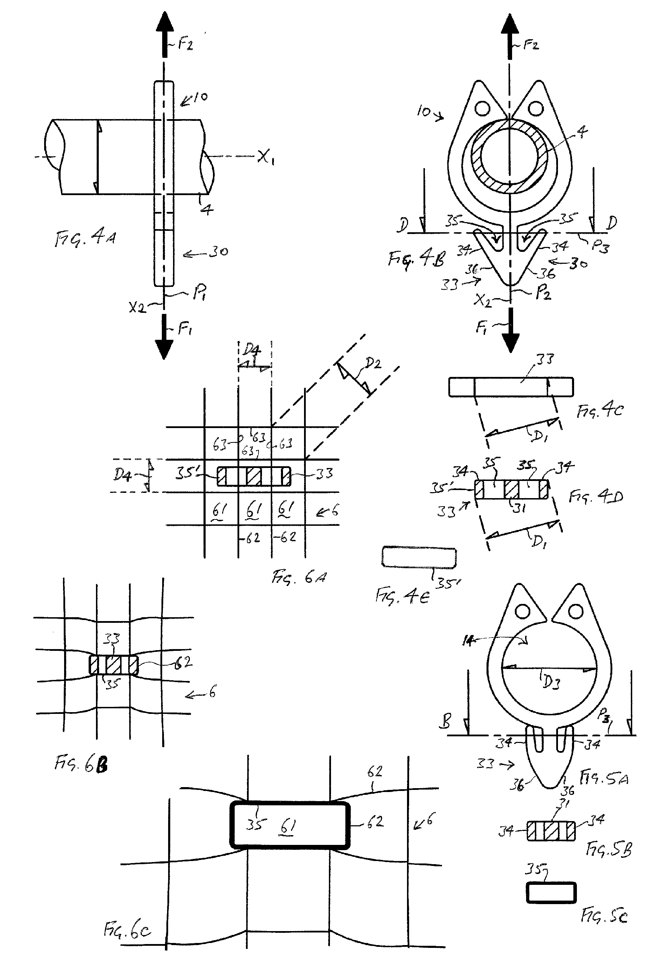

An aperture 14 is defined between the arms 11 for receiving the support 4, the aperture having a distal end region defined by the distal end regions 13 of the arms, which preferably define a smoothly curved boundary 15 at least in the distal end region of the aperture 14 when considered in the reference plane P1 which contains the aperture. In the example shown, the entire aperture is circular with a smoothly curved boundary, which is also rounded in the thickness direction, so that the clip can slide freely along the frame. The aperture is large enough to permit the support portion to rotate freely around the bar or other support 4 when the support is received in the aperture in a rest condition of the clip, wherein the longitudinal axis X1 of the support is normal to the reference plane P1 (Figs. 4A, 4B). This means that the clip can rotate somewhat around the support as the wind direction changes so that the force direction F 1 is always aligned with its length axis X2.

The support, which in the illustrated embodiment comprises a tubular steel or aluminium bar 4 of the frame with a circular cross-section as shown, is received in the aperture 14 between the arms 11 in the use position of the clip as shown in Fig. 3A, wherein the mesh is attached to the fixture portion 30 so that the mesh applies a force corresponding to the weight and static tension of the mesh in the force direction F1 to the fixture portion.

The arms are symmetric about the plane of symmetry P2 which bisects the aperture 14 and the fixture portion 30 and passes between the arms, with the force direction F1 being aligned with this plane of symmetry. This balances the forces between the two arms with respect to the force direction so that the clip operates smoothly and consistently, irrespective of which way round it is engaged with the support.

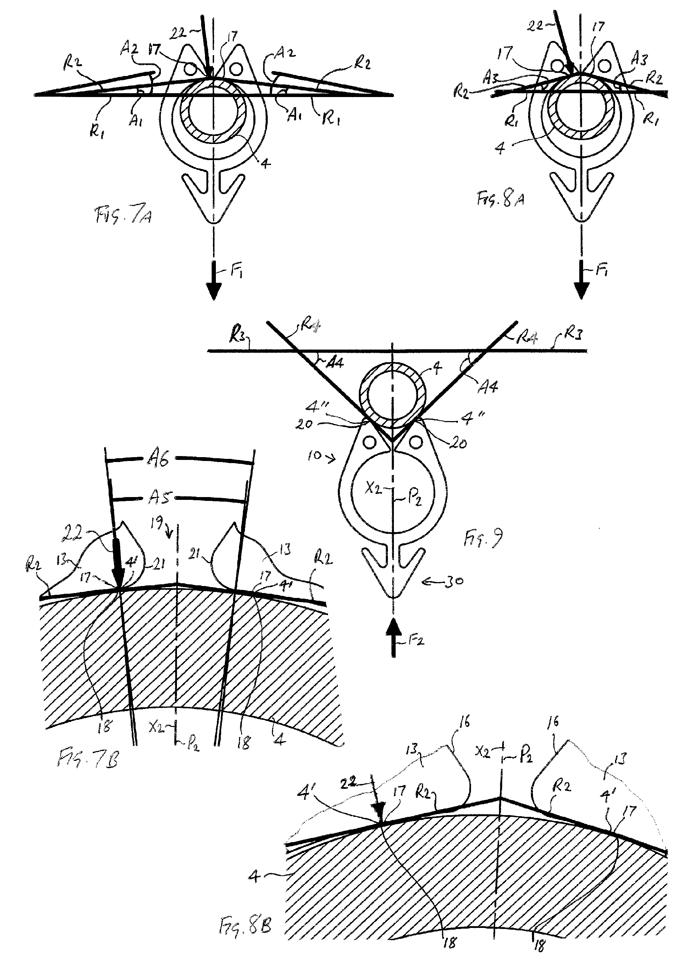

The distal end regions 13 of the arms define a pair of opposed engagement surfaces 16 which diverge when considered in an engagement direction F2 opposite to the force direction. The engagement surfaces are arranged to slidingly engage the bar or other support 4 so as to urge the arms 11 apart to engage the clip with the support when the support is received between the engagement surfaces of the arms and the clip is pushed towards the support in the engagement direction F2 from the initial position of Fig. 9.

The arms 11 are progressively elastically deformable by application of the release force so that the distal end regions of the arms are resiliently urged apart by sliding contact with the bar or other support 4 as further explained below, so as to to disengage the support portion from the support when the release force is applied to the fixture portion in the force direction F 1.

Referring particularly to Figs. 7 - 9, in the use position of the clip, the distal end regions 13 of the arms engage the bar or other support 4 at respective first contact regions 17, the precise point of contact being indicated by the arrows 22.

When considered at rest and in the reference plane P1, each first contact region 17 defines a first acute mean contact angle A1 between the opposed contact surfaces 18, 4' of the clip and the support and a reference line R1 normal to the force direction F1. In the figures, each acute mean contact angle A1 is illustrated between the reference line R1 and a second line R2 which is tangent to the contact surfaces 18, 4' at the first contact region 17.

It will be understood that the opposed contact surfaces 18, 4' of the clip and the support will also have an acute angle of static friction A2 relative to the reference line R1, wherein the angle of friction is the minimum angle of the contact surfaces with respect to the force direction F1 at which a force applied in the force direction F1 will cause the contact surfaces to slip past each other. The angle of friction will depend on the materials of the respective contact surfaces and may be determined empirically or by reference to published data as known in the art.

In tests, it has been found that when the small gap 19 between the rounded tips 21 of the distal end regions of the arms opens to any substantial width at an applied force that is small relative to the release force, the arms will frictionally engage the bar 4 of the frame so that the clip tends to jam when the user attempts to pull the mesh along the frame.

This problem is avoided in the illustrated embodiment by arranging that when the clip is at rest (i.e. the applied force is zero) in the use position, each first acute mean contact angle A1 is smaller than the angle of friction A2. In the illustrated example, the acute mean contact angle A1 is 7° and the angle of friction A2 is 11°.

This means that as the force in the force direction F1 increases, the contact surfaces 18, 4' do not initially slip past each other in the force direction, but instead, the contact surfaces of the arms roll over the surface of the support as the arms 11 are somewhat straightened from the initial rest position (Figs. 7A, 7B) to the position of Figs. 8A, 8B. In this somewhat straightened position, each first acute mean contact angle is increased to a value A3 greater than the angle of friction A2, so that a further increase in the applied force causes the contact surfaces 18, 4' to slip past each other so that the arms are urged further apart by sliding contact with the support to the position shown in Fig. 3B and then fully disengaged from the support (Fig. 3C).

Advantageously, this not only somewhat increases the release force required to detach the support portion from the support, but also tends to prevent the arms from opening to any substantial extent until the applied force has reached the threshold value of Figs. 8A, 8B at which the first acute mean contact angle A3 exceeds the angle of friction. This in turn makes it easier to slide the clips along the length axis of the frame (Fig. 1 C) by preventing the small gap 19 between the distal end regions of the arms from opening under an applied force of less than the threshold value.

For the same reason, the gap 19 is small relative to the cross-sectional dimensions of the support. In the first embodiment the diameter or maximum width D3 of the aperture 14 normal to the length axis X2 and force direction F1 in the rest position is 1.25 times the outer diameter of the bar 4. The gap 19 preferably subtends an angle A5 of no more than about 25° of the circumference of the aperture 14 at rest, measured at the points of convexity where the profile of the rounded tips 21 of the distal end regions of the arms departs from the generally concave margin (smoothly curved boundary 15) of the aperture, which in the illustrated embodiment coincides with the position of the contact surfaces in the rest position indicated by the arrows 22. (For non-circular apertures the angle A5 can be obtained by reference to the central point of the aperture.) In the illustrated embodiment the angle A5 is about 11° of the circumference of the aperture 14 at rest.

This means that when the clip lies against the circular profile of the bar 4 at rest in the use position as shown in Fig. 7B, the gap 19 (measured at the same points) preferably subtends an angle A6 of not more than about 31° of the circumference of the circular outer profile of the bar 4, and in the illustrated example, about 14° of the said circumference. While the ratio between the diameter of the aperture and the bar may be varied (although preferably it is not reduced), the gap 19 is preferably adjusted so that it subtends an angle A6 of not more than about 31 °, more preferably not more than about 22°, most preferably not more than about 14° of the outer circumference of the round bar 4, so that the user can more easily slide the clip along the frame of the cage without causing it to jam.

Referring to Fig. 9, when at rest, the engagement surfaces 16 of the arms are arranged to make initial contact with corresponding engagement surfaces 4" of the support at respective second contact regions 20 when the support is received in the initial position as illustrated between the engagement surfaces of the arms. The clip can then be pushed towards the support in the engagement direction F2 so that the engagement surfaces 16 slidingly engage the bar or other support 4 so as to urge the arms apart to engage or re-engage the clip with the support as shown in Fig. 7A.

When considered in the reference plane P1, each second contact region 20 defines at rest a second acute mean contact angle A4 between the respective engagement surfaces 16, 4" of the arms and the support and a respective second reference line R3 normal to the engagement direction F2. In the figures, the angle A4 is illustrated between the reference line R3 and a line R4 tangent to the engagement surfaces 16, 4" at their point of contact.

The second acute mean contact angle A4 is greater than the first acute mean contact angle A1, so that less force is required to engage the clip with the support than to disengage the clip from the support.

Referring particularly to Figs. 4 - 6, the mesh 6 defines a plurality of equal apertures 61, and the fixture portion 30 is configured to retain the mesh to the fixture portion when the support portion 10 is disengaged from the bar or other support 4 or from the fixture portion, as further described below.

The fixture portion comprises a stem 31, which has a proximal end 32 attached to the support portion 10, and a retaining portion 33 attached to the stem. The retaining portion includes a pair of barbs 34 arranged on opposite sides of the stem, a recess 35 being defined between each barb and the stem, each recess opening towards the support portion so as to receive a respective filament 62 of the mesh to retain the mesh securely to the fixture portion in the use position (Fig. 3A) and when the fixture portion is released from the frame (Fig. 3C). The pair of barbs divide the load between two parallel filaments of the mesh, which minimises distortion.

In the illustrated embodiment the barbs 34 are slightly compressible relative to the stem, although they might alternatively be rigid. The mesh is of course locally deformable and in addition the filaments may be elastically stretchable, for example where each filament comprises a braided or knitted bundle of smaller fibres. The margins 63 of each aperture 61 are bounded and defined by respective portions of the filaments 62 of the mesh.

The retaining portion is inserted by force through any selected one of the apertures 61 in a strained condition of the retaining portion and the mesh (Figs. 5A, 5B, 6B) so as to attach the fixture portion to the mesh. It can be seen that in the strained condition, the barbs are compressed in the aperture so that the retaining portion defines a cross-section as illustrated in Fig. 4D in the plane P3 of the mesh normal to the force direction F1. A continuous line 35 of least possible length defining an envelope which contains this cross-section is illustrated in Figs. 5C and 6C.

Fig. 4D shows a corresponding cross-section of the retaining portion in the plane P3 normal to the force direction F1 in the rest condition wherein the barbs are relaxed. In this condition, a continuous line 35' of least possible length and defining an envelope containing this cross-section, as shown in Fig. 4E, has a total length which is preferably greater than a total length of the margins 63 of each aperture of the mesh in the rest condition of the mesh as shown in Fig. 6A. This ensures that the retaining portion can be forced through an aperture 61 of the mesh in the strained condition of the retaining portion and the mesh, wherein either one or both of the retaining portion and the mesh is elastically deformed, but cannot pass through the aperture in the rest condition. Preferably, the envelope defined by the line 35' is of a different shape to the aperture of the mesh in the rest condition of the mesh, as shown, so that the mesh has to be distorted as well as stretched in order to insert the retaining portion. This gives a very secure attachment.

In the rest condition of the retaining portion and the mesh (Figs. 4, 6A), the retaining portion 33 has a maximum linear dimension D1 in the plane P3 which is greater than an average maximum linear dimension D2 of each aperture of the mesh in the same plane. As a rule of thumb, for a generally flat retaining portion as shown, the dimension D1 is preferably at least 200%, more preferably at least 220% of the average distance D4 between adjacent filaments of the mesh in each direction normal to the filaments. (D4 is taken between the centre lines of the filaments and will usually have either one or two values depending on whether the mesh is square or not. 200% of the average of these values corresponds to the diagonal dimension of an aperture of a rectilinear mesh in a maximally distorted condition but before the filaments begin to extend elastically.)

For the square mesh illustrated in the rest condition in Fig. 6A, the total length of the four margins 63 of each aperture will be 4 × D4.

Since the retaining portion is configured with ramped surfaces 36 to spread the filaments of the mesh when it is inserted through the mesh, and backwardly facing barbs 34 to engage the mesh to prevent it from being withdrawn, this ensures that the retaining portion is easy to insert but afterwards remains securely fastened to the mesh. A maximum (width) dimension of the support portion in the reference plane P1 transverse to the force direction F 1 is larger than a maximum dimension of the mesh, so that after detachment from the frame, the mesh is trapped between the support portion and the retaining portion.

In alternative embodiments, one or more than two barbs might be provided. Rather than recesses, the barbs might have flat surfaces normal to the force direction to retain the mesh.

The first clip may be used also for square or other non-circular tubing, in which case the circular aperture 14 allows the clip to rotate freely around the tubing so that the length axis of the clip is always aligned with the force direction F1.

However, the problem then arises that the geometric relationship between the contact surfaces of the clip and the frame is variable according to the direction of the wind relative to the orientation of the frame, so that the release force may vary with the orientation of the clip.

To ensure that the force required to achieve detachment is unaffected by the orientation of the clip relative to the non-circular cross-section of the frame, the second embodiment of Figs. 10 - 15 provides a two-part clip wherein the support portion is configured to disengage from the fixture portion (which is to say, the fixture portion is configured to disengage from the support portion) when the release force is applied to the fixture portion in the force direction F 1, leaving the support portion attached to the frame.

The support portion 210 is a plastics moulding having two arms which are openable (Fig. 12) to receive the support and closeable (Fig. 10A) to engage the clip with the support (which in the illustrated example is a round tubular bar 4, although it could be square or any other shape). The distal ends of the arms have cooperating dentate portions 211, 212 which interengage to fasten the distal ends of the two arms together. The proximal ends of the arms are united with a cylindrical insert element 213 arranged between two plates 214.

The fixture portion 230 comprises a socket 231 defined between two resilient capture elements 232 which are urged apart to engage the insert element in the socket between the capture elements in the use position of the clip (Fig. 14). In the use position the fixture portion can rotate somewhat about the length axis X3 of the insert element (which is normal to the length axis of the support in the use position), similarly to a ball-and-socket joint, while the large, rounded aperture 214 allows the support portion to rotate around the support so that the force direction F1 remains in alignment with the length axis X2 of the support portion. The capture elements 232 are elastically deformable so that they can be released from the insert element by the application of the release force in the force direction F1 (Fig. 15).

The fixture portion 230 defines a ring 233 with a narrow aperture 234 which is normally closed by the abutment of the elastic walls of the ring. The ring is elastically deformable so that a filament 62 of the mesh can be inserted into the channel 235 and forced between the walls of the ring through the aperture 234 and into the ring in which it is securely retained.

Referring to Figs. 16 - 17, the third embodiment also comprises a support portion 310 which is disengageable from the fixture portion 330 by application of the release force in the force direction F 1. The support portion includes a ring 311 which is slidingly fed onto the tube 4 of the frame when the frame is assembled, and an insert element formed as a ball 312 which is attached to the ring by a stem 313.

The fixture portion 330 includes a pair of capture elements 331, each comprising a resilient arm 332 terminating in a ring 333. When the fixture portion is urged towards the support portion, the arms 332 are urged apart so that the ball is received between the capture elements and the rings 333 engage the outer surface of the ball 312 to engage the two parts together in the use position of the clip in a manner similar to a ball-and-socket joint (Fig. 16, Fig. 17A). In the use position the fixture portion can rotate around the length axis X5 of the rings 333, and also about the length axis X2 of the support portion along which the force direction F1 lies. The arms are urged apart by sliding engagement with the ball when the release force is applied to the fixture portion (Fig. 17B) so as to release the fixture portion from the support portion (Fig. 17C).

In other respects the fixture portion 330 of the third embodiment is similar to the fixture portion 30 of the first embodiment, having a stem 31 with a proximal end 32 attached to the support portion in the use position of the clip, and a barbed retaining portion 33. Although not shown in the drawings, the fixture portion preferably also includes an outwardly extending part having at least one dimension transverse to the force direction F1 which is larger than a corresponding dimension of the mesh, e.g. a flange or tabs forming extensions of the rings 333, to prevent the stem and capture elements from passing through the mesh after detachment from the support portion. The mesh is trapped between this outwardly extending part (not shown) and the barbed retaining portion 33, which together are configured to retain the mesh to the fixture portion when the support portion 310 is disengaged from the fixture portion.

In further alternative embodiments, the insert element and capture elements could take any desired form. For example, the capture elements could engage in recesses in the insert element, or the insert element could have compressible parts which engage resiliently in the capture elements. There could be more than two capture elements. The capture elements could be opposite walls of a cavity. Of course, the insert element could be arranged on the fixture portion and the capture elements on the support portion.

In summary, a preferred embodiment provides a horticultural cage comprising a mesh enclosure attached to a frame by means of clips, each clip including a portion which is released without damage from the frame, the mesh, or another portion of the clip when the force applied by the mesh to the clip reaches a threshold limit, so that the clips can afterwards be re-engaged in the use position to re-suspend the mesh from the frame. The clips prevent weather damage to the frame and are preferably slidable along the frame for ease of access to the plants within the enclosure.

In each of the illustrated embodiments, the support portion is configured to disengage from the support or from the fixture portion when the release force is applied to the fixture portion in the force direction, and at least the fixture portion remains securely attached to the mesh when the mesh is released from the support. This makes it easy to identify the correct point on the mesh to re-attach to the frame, simply by locating the fixture portion of the clip. Preferably the clip is made in a bright or fluorescent colour so that the fallen portion of the clip is easy to locate.

Rather than achieving this by means of a pair of symmetric, resilient arms which engage a bar of the frame as illustrated in the first embodiment or a ball-and-socket type joint which connects the two portions together as illustrated in the second and third embodiments, any other suitable releasable mechanical connection may be adopted.

For example, the support portion might comprise a flexible hook which is distorted to a release position by application of the release force. Alternatively, the support portion might comprise two asymmetric arms defining an aperture between them, wherein one of the arms is resiliently deformable and the other either resiliently deformable or substantially rigid.

Alternatively, a pair of magnetic elements (e.g. a first magnet and a ferrous material or second magnet) may be provided, respectively on the support portion and the fixture portion, to hold the two parts together and to disengage at the release force.

Alternatively, the support portion may comprise a hinged or flexible bar which retains the support in an aperture of the clip. The bar is opened by hand and then closed again to engage the clip with the support, and is then held in the closed position by a suitable mechanism such as a pair of magnetic elements or a mechanical catch, releasable by application of the release force.

Alternatively, the support portion may comprise a recessed magnetic shoe which receives a steel support such as a bar of the cage and holds the clip to the cage until it is disengaged by application of the release force.

Alternatively, the support portion or fixture portion may comprise a clamp, a hook with a snap closure similar to a carabiner, or a strap closeable by a buckle, complementary portions of hook-and-loop material, or other convenient closure means. The portions of hook-and-loop material may be arranged to peel apart at the release force to release the clip from the support.

In yet further alternative embodiments, the fixture portion may be configured to disengage from the fabric without damaging the fixture portion or the fabric when the release force is applied to the fixture portion in the force direction, in which case the clip will remain attached to the support. This configuration is less preferred however, since it makes it more difficult for the user to identify the margins of the respective panels of the fabric, particularly where the fabric is a mesh, so as to re-attach the enclosure to the frame in the correct position.

This may be achieved for example by providing the fixture portion with a resilient hook or hooks, each of which engages a filament of the mesh until it is deformed to a release position by application of a release force. Alternatively, the mesh may be sandwiched between two portions of complementary hook-and-loop material which are peeled apart at the release force. Alternatively, the fixture portion may comprise a pair of jaws which are resiliently or magnetically biased together so as to retain a portion of the fabric by friction between the jaws and to release the fabric undamaged when a release force is applied, sufficient to overcome the friction.

In each of the embodiments, the clip comprises disengagement means configured to release the fabric from the support without damage to the clip, the support or the fabric, so that after disengagement the fixture portion and/or support portion is re-engageable to re-suspend the fabric at the same point from the support in the same use position of the clip.

The novel clip may be applied in any situation where it is desired to release a fabric from a support when a predetermined force is applied via the fabric to the clip. For example, the clips may be used to attach a mesh to a frame so as to form a cricket practice net, wherein the mesh will disengage from the frame without damage if a player inadvertently steps or falls on it. In yet further alternative embodiments, rather than engaging a linear bar of a frame, the support portion of the clip could be configured to engage any suitable support. Similarly, the fabric could be a woven textile, a transparent plastics film, a fleece, or any other desired flexible sheet material. For example, the novel clip could be used to attach a shower curtain to a rail so that the curtain detaches if the user sits or steps on it without damaging the fabric or the rail. The support portion may be configured for example with a slider to engage in a slot in the rail. The support portion could incorporate more than one material, comprising for example a body portion with a PTFE lining which slidingly engages the bars of the frame.

Many further adaptations are possible within the scope of the claims.

## Claims

1. An assembly comprising a clip (3), a fabric (6), and a support (4);
the clip including a fixture portion (30, 230, 330) for engaging the clip with the fabric, and
a support portion (10, 210, 310) for engaging the clip with the support,
so as to suspend the fabric from the support in a use position of the clip
wherein the fabric applies a force in a force direction (F1) to the fixture portion;
**characterised in that** a respective one of the fixture portion and the support portion is disengageable, respectively from the fabric, the support, or the other respective one of the fixture portion and the support portion by a release force of predetermined magnitude applied to the fixture portion in the force direction, so as to release the fabric from the support without damage to the clip, the support or the fabric;
and after disengagement, the respective one of the fixture portion and the support portion is re-engageable to re-suspend the fabric from the support in the use position of the clip.

2. An assembly according to claim 1, wherein the support portion (10) includes a pair of arms (11) defining an aperture (14) between the arms, the support being received in the aperture in the use position of the clip;
each arm having a proximal end region (12) and a distal end region (13), the proximal end regions being joined to the fixture portion (30);
and the distal end regions of the arms are configured to be urged apart by sliding contact with the support so as to to disengage the support portion from the support by resilient deformation of the support portion when the release force is applied to the fixture portion in the force direction.

3. An assembly according to claim 2, wherein the aperture is large enough to permit the support portion to rotate freely around the support when the support is received in the aperture in a rest condition of the clip.

4. An assembly according to claim 2, wherein the arms are symmetric about a plane of symmetry (P2) which passes between the arms and is aligned with the force direction.

5. An assembly according to claim 2, wherein in the use position of the clip, the distal end regions of the arms engage the support at respective first contact regions (17);
and when considered in a reference plane (P1) aligned with the force direction and containing the aperture, each first contact region defines a first acute mean contact angle (A1, A3) between opposed contact surfaces (18, 4') of the clip and the support and a reference line (R1) normal to the force direction;
the opposed contact surfaces of the clip and the support further having an acute angle of friction (A2) relative to the said reference line;
and when at rest in the use position, each first acute mean contact angle (A1) is smaller than the angle of friction;
and the arms are progressively elastically deformable by application of the release force until each first acute mean contact angle (A3) is greater than the angle of friction.

6. An assembly according to claim 2, wherein the distal end regions of the arms define a pair of opposed engagement surfaces (16), the engagement surfaces of the arms diverging when considered in an engagement direction (F2) opposite to the force direction;
the engagement surfaces of the arms being arranged to slidingly engage the support so as to urge the arms apart to engage the clip with the support when the support is received between the engagement surfaces of the arms and the clip is pushed towards the support in the engagement direction.

7. An assembly according to claim 2, wherein in the use position of the clip, the distal end regions of the arms engage the support at respective first contact regions (17);
and when considered in a reference plane (P1) aligned with the force direction and containing the aperture, when at rest in the use position of the clip, each first contact region defines a first acute mean contact angle (A1) between opposed contact surfaces (18, 4') of the clip and the support and a first reference line (R1) normal to the force direction;
and the distal end regions of the arms define a pair of opposed engagement surfaces (16), the engagement surfaces of the arms diverging when considered in an engagement direction (F2) opposite to the force direction;
the engagement surfaces of the arms being arranged to make initial contact with corresponding engagement surfaces (4") of the support at respective second contact regions (20) when the support is received between the engagement surfaces of the arms, and thereafter to slidingly engage the support so as to urge the arms apart to engage the clip with the support when the clip is pushed towards the support in the engagement direction;
and when considered in the said reference plane, each second contact region defines a second acute mean contact angle (A4) between the respective engagement surfaces of the arms and the support and a respective second reference line (R3) normal to the engagement direction;
and the second acute mean contact angle (A4) is greater than the first acute mean contact angle (A1), so that less force is required to engage the clip with the support than to disengage the clip from the support.

8. An assembly according to claim 1, wherein the support portion (10, 210, 310) is configured to disengage from the support (4) or from the fixture portion (230, 330) when the release force is applied to the fixture portion.

9. An assembly according to claim 8, wherein the fabric is a mesh (6) defining a plurality of equal apertures (61);
and the fixture portion (30, 230, 330) is configured to retain the mesh when the support portion is disengaged from the support or from the fixture portion.

10. An assembly according to claim 9, wherein the fixture portion (30, 330) comprises a stem (31) and a retaining portion (33) attached to the stem, the stem having a proximal end (32) attached to the support portion (10, 310) in the use position of the clip;
and the retaining portion is insertable through any selected one of the apertures of the mesh in a strained condition of the retaining portion and the mesh so as to attach the fixture portion to the mesh,
the retaining portion defining a cross-section in a plane (P3) normal to the force direction (F1) in a rest condition of the retaining portion;
each aperture of the mesh being bounded by respective filaments (62) of the mesh defining respective margins (63) of the aperture;
and a continuous line (35') of least possible length containing the said cross-section has a total length which is greater than a total length of the margins (63) of each aperture in a rest condition of the mesh,
so that the retaining portion can pass through an aperture of the mesh in the strained condition but not in the rest condition of the retaining portion and the mesh.

11. An assembly according to claim 9, wherein the fixture portion (30, 330) comprises a stem (31) and a retaining portion (33) attached to the stem, the stem having a proximal end (32) attached to the support portion (10, 310) in the use position of the clip;
and the retaining portion is insertable through one of the apertures of the mesh so as to attach the fixture portion to the mesh;
and the retaining portion includes a pair of barbs (34) arranged on the stem.

12. An assembly including a plurality of clips (3) and a mesh (6) according to any of claims 9 - 11, wherein the support (4) is a frame (2) of a cage (1), and the clips attach the mesh to the frame.

13. An assembly according to claim 12, wherein the cage (1) is a horticultural cage for excluding animals from growing plants, and in the use position at least some of the clips are slidable along a length axis (X1) of the frame.

14. A horticultural cage (1) for excluding animals from growing plants, the cage including a plurality of clips (3), a support (4), and a fabric (6) according to any of claims 1 - 8; wherein the support is a frame (2) of the cage, and the clips attach the fabric to the frame.

15. A clip as defined in claim 1 for use in attaching a fabric (6) to a support (4).
